Europäisches Patentamt

European Patent Office

Office européen des brevets

(19)

(11) Veröffentlichungsnummer: **0 339 373**

A1

(12) **EUROPÄISCHE PATENTANMELDUNG**

(21) Anmeldenummer: 89106524.5

(22) Anmeldetag: 12.04.89

(51) Int. Cl.⁴: **G04G 15/00** , **G05D 23/19**

(30) Priorität: 25.04.88 DE 3813921

(43) Veröffentlichungstag der Anmeldung:
02.11.89 Patentblatt 89/44

(84) Benannte Vertragsstaaten:
**DE FR GB IT**

(71) Anmelder: **Siemens Aktiengesellschaft**
**Wittelsbacherplatz 2**
**D-8000 München 2(DE)**

(72) Erfinder: **Marx, Jürgen, Dipl.-Ing. (FH)**
**Schenkendorfstrasse 34b**
**D-8500 Nürnberg(DE)**
Erfinder: **Baumgärtner, Manfred, Dr.**
**Jakob-Henle-Strasse 26**
**D-8510 Fürth(DE)**

(54) **Mikrocomputergesteuerte Programm-Einstellvorrichtung für ein Zeitschaltgerät.**

(57) Die Programm-Einstellvorrichtung für einen Zeitschalter besitzt ein Anzeigedisplay (1) für die aktuelle Uhrzeit und sonstige Funktionen. Diese sind über sinnfällige Markierungen mit Tasten für jede einzelne Funktion (12-16) sowie Tasten (17-21) zum Eingeben, Anzeigen und Löschen von uhrzeitabhängigen Daten sowie zum uhrzeitunabhängigen Betätigen des Schalters versehen. Soweit die Reihenfolge der Bedienung nicht beliebig ist, legt der Mikrocomputer die Bedienungsfolge durch Blinken der für die Datenauslese bzw. die Dateneingabe erforderlichen Leuchtanzeigen fest.

FIG 1

EP 0 339 373 A1

## Mikrocomputergesteuerte Programm-Einstellvorrichtung für ein Zeitschaltgerät

Die Erfindung betrifft eine mikrocomputergesteuerte Programm-Einstellvorrichtung für ein Zeitschaltgerät mit einem Schalter zum Ein- und Ausschalten eines elektrisch steuerbaren Gerätes nach dem Oberbegriff des Patentanspruchs 1.

Zeitschaltuhren haben den Zweck, elektrisch steuerbare Geräte, beispielsweise Raumheizungsanlagen, zu bestimmten einstellbaren Zeitpunkten ein- und auszuschalten. Dabei können auch weitere Funktionen von Hand oder mit Hilfe der Zeitschaltuhr getätigt werden, beispielsweise das Ein- und Ausschalten des Gerätes durch Handbedienung. In letzter Zeit werden die mechanischen Zeitschaltuhren in steigendem Umfang durch elektronische Zeitschaltuhren abgelöst. Diese bieten den Vorteil einer erweiterten Anwendung, beispielsweise das zeitabhängige Ein-und Ausschalten zu unterschiedlichen Zeitpunkten an einzelnen Wochentagen. Damit ist es möglich, ein Zeitprogramm für das Ein- und Ausschalten für jeden einzelnen Wochentag oder für Gruppen von Wochentagen zu speichern und an den einzelnen Wochentagen abzurufen.

Eine solche mikrocomputergesteuerte Programm-Einstellvorrichtung in einer Funktion als Heizungsregler ist etwa aus der Zeitschrift "Elektronikpraxis" Nr. 10, Oktober 1981, Seiten 154 und 155 bekannt. Das Leitgerät dieses Heizungsreglers ist so aufgebaut, daß es eine in der üblichen Weise einstellbare elektronische Zeitschaltuhr, einen Mikrocomputer sowie einen Funktionsschalter besitzt, dessen einzelne Stufen das Einstellen der Uhrzeit, das Einspeichern eines Ein- und Ausschaltprogrammes, dessen Zuordnung zu einzelnen Wochentagen sowie die Dauereinschaltung und die Dauerausschaltung des angeschlossenen Gerätes ermöglicht.

Der Nachteil dieser Programm-Einstellvorrichtung besteht vor allem darin, daß das Programmieren eine spezielle Sachkenntnis erfordert. Insbesondere bei nur gelegentlichem Bedienen des Leitgerätes, etwa zum Umprogrammieren aufgrund besonderer Anlässe (Feiertage), geht das einmal erworbene Wissen zwischen den Bedienungsintervallen wieder verloren, so daß jedes Mal die Bedienungsanleitung zugezogen werden muß. Dies ist zum einen umständlich und zum anderen besteht die Möglichkeit, daß die Bedienungsanleitung in der Zwischenzeit verlegt worden ist.

Der Erfindung liegt die Aufgabe zugrunde, die Bedienungsperson vom Mikrocomputer der Programm-Einstellvorrichtung so führen zu lassen, dabei die Bedienungs- und Anzeigeelemente so einleuchtend zueinander in Beziehung zu setzen und so logisch zu plazieren, daß auch eine technisch nicht sachverständige Bedienungsperson ohne Bedienungsanleitung eine Programmierung durchführen kann. Dazu ist es auch erforderlich, daß etwaige Fehlbedienungen nicht den bereits richtig programmierten Teil wieder umwerfen, sondern der Fehler toleriert oder als solcher kenntlich gemacht und der richtige Weg gewiesen wird. Außerdem muß die Tastenbedienung jeder individuellen Denkreihenfolge angepaßt sein, d.h. es darf keine bestimmte Reihenfolge bei der Einstellung der verschiedenen Parameter vorgeschrieben sein, die nur aus der Bedienungsanleitung entnehmbar ist.

Diese Aufgabe wird durch die im Patentanspruch 1 angegebene Erfindung gelöst. Dadurch ist erreicht, daß die Bedienungsperson lediglich vor der Aufgabe steht, die aktuelle Uhrzeit zu kontrollieren und gegebenenfalls zu korrigieren, die Ein-und Ausschaltzeitpunkte jedes Wochentages festzulegen, diese einzugeben und eventuell nach erfolgter Eingabe die gespeicherten Daten durch Auslesen zu prüfen und erforderlichenfalls zu korrigieren. Außerdem ist es auf einfache Weise möglich, eine Dauereinschaltung bzw. die sogenannte "Partyschaltung" zu betätigen, d.h. das Ein- und Ausschalten von Hand zu steuern. Sofern dazu eine bestimmte Reihenfolge einzuhalten ist, wird diese vom Mikrocomputer festgelegt und durch Blinken der entsprechenden Leuchtanzeigen dem Bediener vorgegeben. Diese Leuchtanzeigen sind entweder deutlich beschriftet oder durch Pfeile entsprechenden Tasten zugeordnet. Sofern die Einstellung eine beliebige Reihenfolge zuläßt, wird diese von der Einstellvorrichtung toleriert. So ist es beispielsweise der Bedienungsperson freigestellt, ob sie bei der Zeiteinstellung zunächst die Stunden und dann die Minuten einstellt oder umgekehrt vorgeht. Auch steht es der Bedienungsperson frei, auf einen Tag bezogen zuerst den Einschaltzeitpunkt und dann den Ausschaltzeitpunkt oder umgekehrt einzugeben. Es muß lediglich durch Druck der entsprechenden Tasten "Einschalten" bzw. "Ausschalten" der Bezug zu der gewählten Uhrzeit hergestellt werden.

Zur Herstellung einer eindeutigen Zuordnung und Bedienungsübersicht dient auch die Weiterbildung gemäß Patentanspruch 2, nach der jede Taste nur mit einer einzigen Funktion belegt ist.

In einer besonders vorteilhaften Ausbildung der Vorrichtung gemäß Patentanspruch 3 wird die Umschaltung von Sommerzeit auf Winterzeit dadurch besonders übersichtlich und einfach, daß der zwischen Stunden- und Minutenanzeige der Uhr vorhandene Doppelpunkt als Symbol für die jeweilige saisonale Zuordnung mit sinnfälligen Markierungen versehen ist.

In einer weiteren Ausführungsform nach Patentanspruch 5 ist das Anzeigedisplay von einer Abdeckplatte umgeben, die leicht auswechselbar ist und daher mit einem Klartext in der jeweiligen Landessprache versehen werden kann.

Eine weitere vorteilhafte Ausbildung ist Gegenstand des Patentanspruchs 6. Normalerweise muß, wenn an einem bestimmten Tag von der eingestellten Programmierung abgewichen werden soll, mit Hilfe eines sogenannten "Partyschalters" eine Dauereinschaltung vorgenommen werden, die nach Beendigung der Ausnahmesituation wieder rückgängig gemacht werden muß. Dies kann leicht übersehen werden. Nach dem Ausbildungsmerkmal des Patentanspruchs 6 bleibt der Schalter in der Party-Stellung nur solange geschlossen, bis der nächste einprogrammierte Schaltpunkt erreicht ist, der dann die Einschaltung selbsttätig aufhebt oder in der gewünschten Weise weiterführt. Dadurch kann eine zweite Betätigung zur Aufhebung der Partyschaltung unterbleiben.

Einzelheiten der Erfindung werden anhand des folgenden Ausführungsbeispiels näher erläutert.

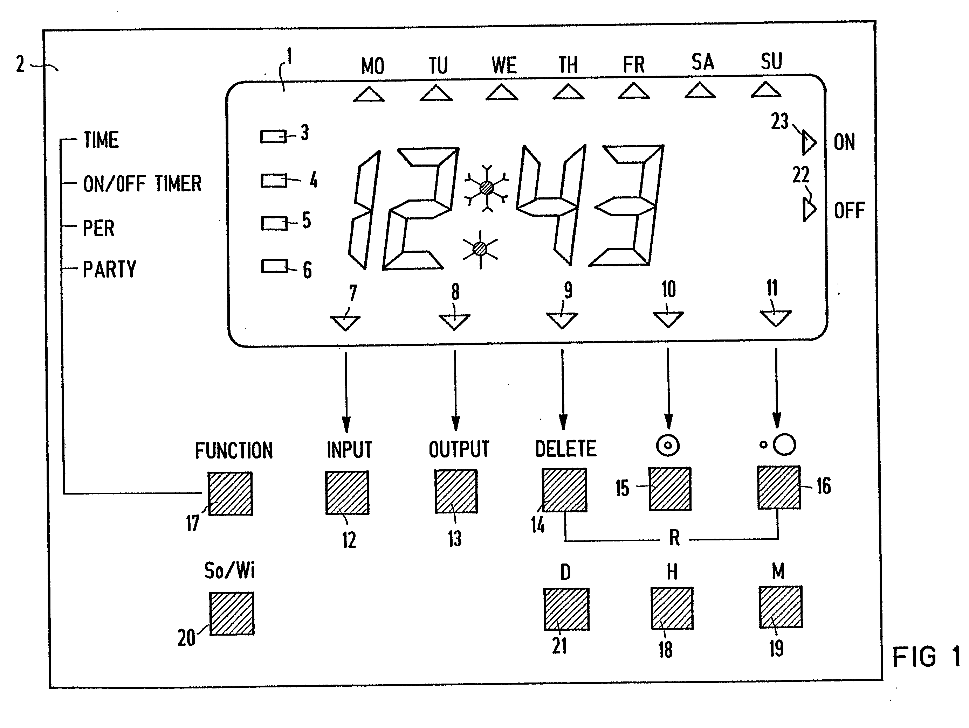

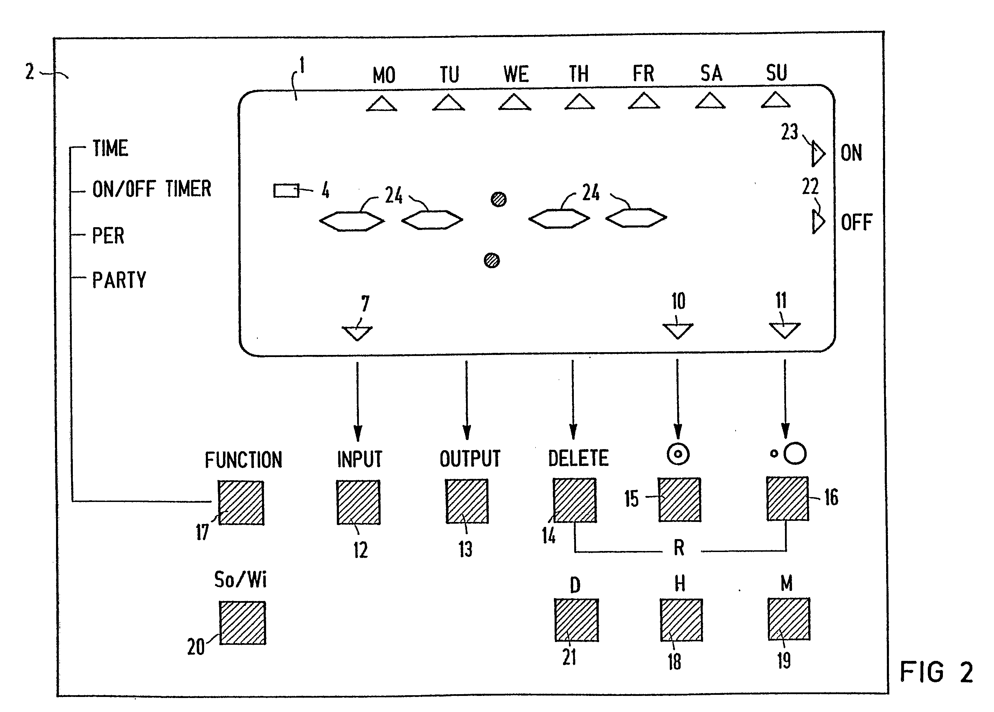

Darin zeigen FIG 1 die Grundausstattung der Einstellvorrichtung und die FIG 2,3,4 und 5 deren verschiedene Betriebszustände.

Gemäß FIG 1 ist das Display 1 von einer auswechselbaren Abdeckplatte 2 umgeben. Das Display besitzt an seinem linken Rand senkrecht untereinander angeordnete Leuchtanzeigen 3, 4, 5, 6 für die einzelnen Funktionen der Einstellvorrichtung. Außerdem ist das Display entlang seinem oberen Rand mit pfeilförmigen Leuchtanzeigen in Form von LCD-Segmenten versehen, die auf der Abdeckplatte 2 mit zugeordnetem Kurzzeichen für die Wochentage bezeichnet sind. Parallel zum unteren Rand des Displays sind weitere Leuchtanzeigen 7 bis 11 aufgereiht, denen Tasten 12 bis 16 über entsprechende Pfeile auf der Abdeckplatte 2 sinnfällig zugeordnet sind. Im Zentrum des Displays 1 erscheinen in der üblichen Segmentanzeige entweder die aktuelle Uhrzeit, die Einschaltzeit, die Ausschaltzeit oder den Funktionstasten entsprechende Markierungen oder Kurzbezeichnungen.

Mit Hilfe einer Funktionstaste 17 können die einzelnen Stufen der Funktionsanzeige zyklisch angewählt werden. Die Leuchtanzeige 3 entspricht der aktuellen Uhrzeit, die Leuchtanzeige 4 den zu wählenden oder gewählten Schaltzeitpunkten, die Leuchtanzeige 5 der Dauereinschaltung des zu steuernden Gerätes und die Leuchtanzeige 6 der Partyschaltung. Eine weitere Leuchtanzeige am rechten Rand des Displays 1 kennzeichnet die Partyschaltung als gesetzt oder nicht gesetzt.

In der Funktionsstufe 3 für das Einstellen der aktuellen Uhrzeit erscheint die jeweils eingestellte Uhrzeit und die entsprechenden Leuchtanzeigen für den Tag sowie die Symbole für Sommerzeit/Winterzeit blinken. Nun kann diese Uhrzeit durch Betätigen der Tasten 18 für die Stunden und 19 für die Minuten korrigiert werden. Nach dem Betätigen dieser Tasten leuchten die entsprechenden Zahlen bzw. Symbole dauernd. Die Umschaltung von Sommer- auf Winterzeit SO/WI erfolgt mittels der Taste 20. Als Leuchtanzeige dient der Doppelpunkt zwischen der Stunden-und der Minutenanzeige der Uhrzeit. Dabei ist der obere Punkt des Doppelpunktes von einem Wintersymbol und der untere Punkt des Doppelpunktes von einem Sommersymbol umgeben. Bei Betätigung der Taste 20 leuchtet das betreffende Symbol des Doppelpunktes dauernd auf. Die Uhrzeit ist dann auf Sommer- bzw. Winterzeit eingestellt.

Nach erneutem Betätigen der Funktionstaste 17 erlischt die Leuchtanzeige 3 und die Leuchtanzeige 4 leuchtet ständig. Damit ist die vorher eingestellte Uhrzeit abgespeichert. Gleichzeitig blinken die den Tasten 12, 13, 14 zugeordneten Leuchtanzeigen 7, 8, 9. Nun können mit der Taste 12 die Funktionen Schaltzeitpunkte "Eingeben" oder mit der Taste 13 die Funktion Schaltzeitpunkte "Auslesen" oder mit der Taste 14 die Funktion Schaltzeitpunkte "Löschen" angewählt werden.

Nach dem Drücken der Taste 12 "Eingeben" leuchtet die Leuchtanzeige 7 dauernd und die Leuchtanzeigen 8 und 9 verlöschen. Die Leuchtanzeigen für die Wochentage MO bis SO blinken, der Doppelpunkt leuchtet konstant und anstelle der Ziffernanzeige für Stunden und Minuten blinken Balkensymbole 24. Die Leuchtanzeigen 10 und 23 sowie 11 und 22 blinken abwechselnd (FIG 2).

Mit Hilfe der Tasten 18, 19 und 21 können nun die den Wochentagen zugeordneten Schaltzeiten gewählt werden. Die entsprechenden Leuchtanzeigen leuchten dann dauernd. Mit der Taste 21 können auch entsprechende Tagesblöcke gewählt werden, die nach den Einzeltagen im Display erscheinen, z.B. MO bis FR. Dabei leuchten dann die Leuchtanzeigen für MO, DI, MI, DO und FR gleichzeitig dauernd. Mit den Tasten 15 und 16 kann dann die jeweils eingestellte Schaltzeit zu einer Einschaltzeit oder Ausschaltzeit bestimmt werden. Dabei erlöschen die Leuchtanzeigen 10 und 11 und die Leuchtanzeige 22 oder 23 leuchtet dauernd.

Das Betätigen der Tasten 15, 16, 18, 19, 21 kann in beliebiger Reihenfolge vorgenommen werden. Sobald alle entsprechenden Leuchtanzeigen konstant leuchten, wird der jeweils gewählte Schaltzeitpunkt automatisch abgespeichert. Durch erneutes Betätigen der Taste 12 "Eingeben" können weitere Schaltzeitpunkte gewählt werden.

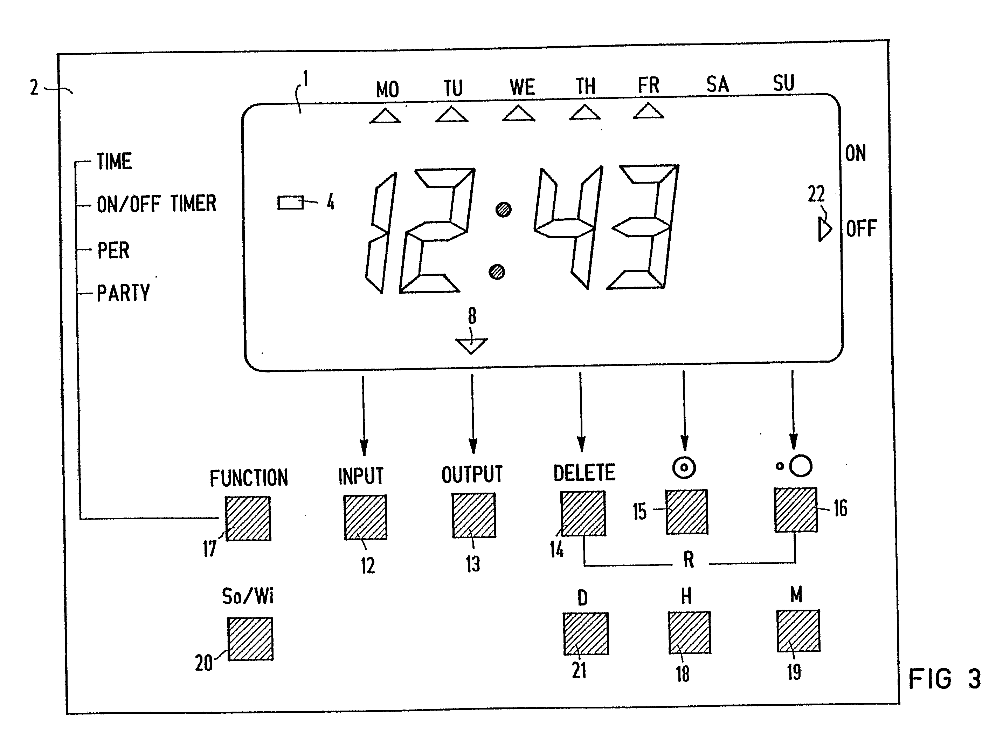

Zum Auslesen der gewählten Schaltzeitpunkte wird die Taste 13 gedrückt. Dabei erlöschen die Leuchtanzeigen 7 und 9. Der jeweilige Schaltzeitpunkt erscheint dann durch die Konstantanzeige von Stunde und Minute sowie die Leuchtanzeigen für den jeweiligen Tag sowie die Leuchtanzeige 23 für "Ein" oder 22 für "Aus". Das weitere Betätigen der Taste 13 bringt dann den nächsten Schaltzeitpunkt in das Display (FIG 3).

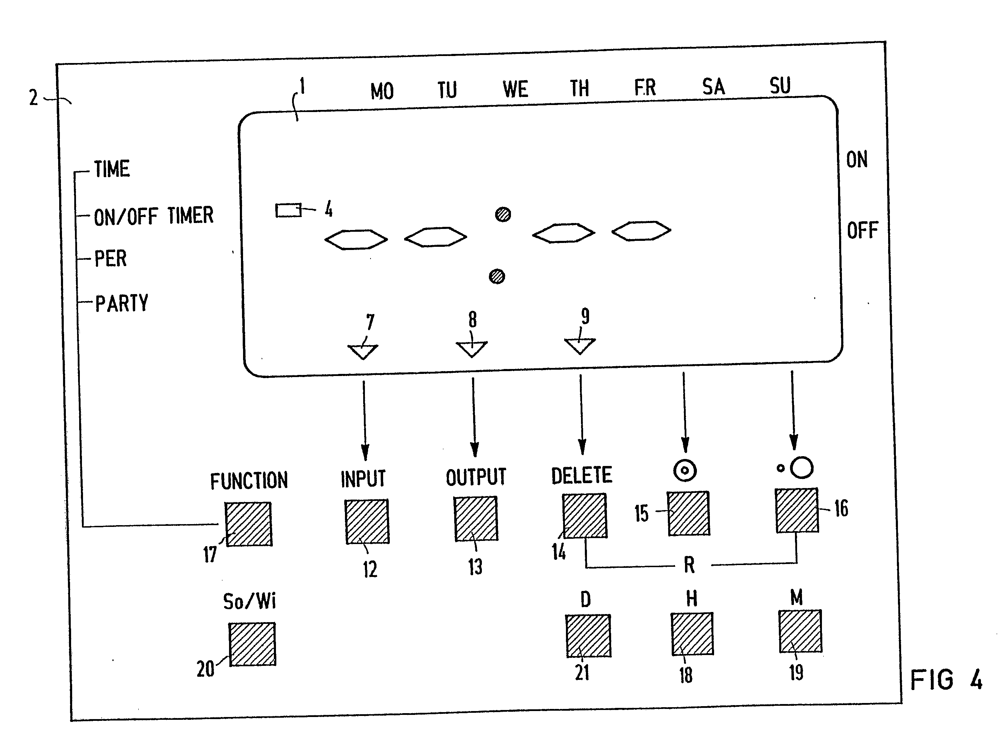

Erweist sich eine Programmierung als fehlerhaft, kann durch Druck der Taste 14 "Loschen" die betreffende Schaltzeit gelöscht werden. Dabei verlöschen die Leuchtanzeigen für die Tage sowie 22 und 23 für "Aus" bzw. "Ein" und anstelle der Uhrzeit erscheinen Balkensymbole. Nach ca. 1 Sekunde fangen die Leuchtanzeigen 7, 8 und 9 an zu blinken. Danach kann durch Drücken der Taste 12 ein neuer Schaltzeitpunkt eingegeben und durch Drücken der Taste 13 ausgelesen werden (FIG 4).

Nach Abschluß der Programmierung der Ein- bzw. Ausschaltzeiten kann die Funktion "Schaltzeitpunkte" entweder dadurch verlassen werden, daß die Taste 17 erneut betätigt wird, sonst geschieht dies automatisch nach ca. 2 Minuten.

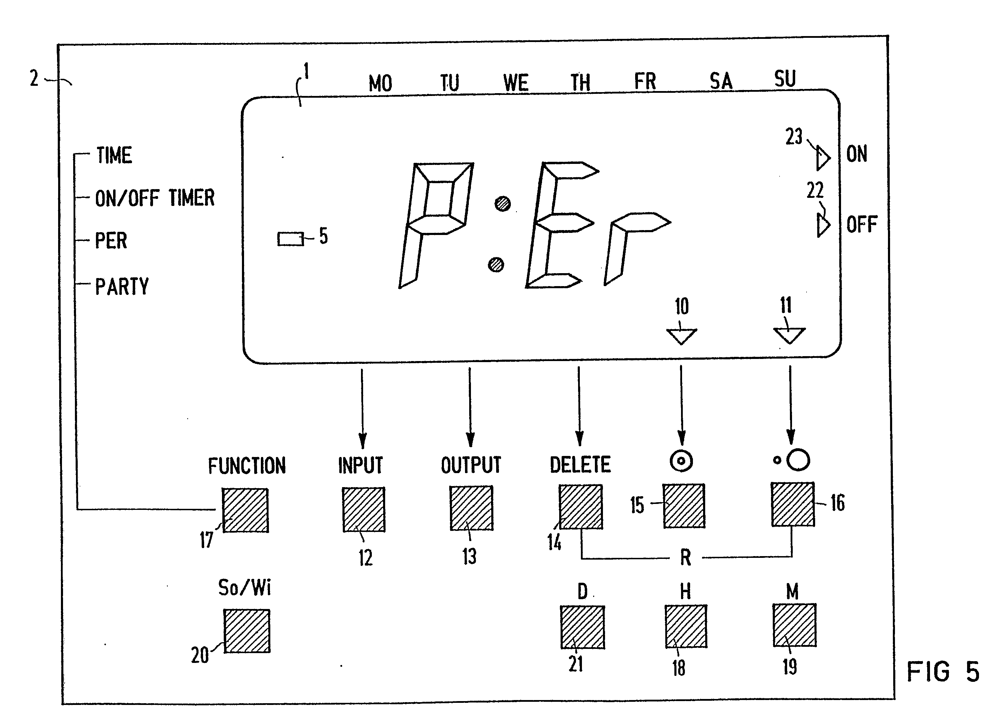

Soll nun aus besonderen Gründen das Ein- und Ausschalten entsprechend den programmierten Zeiten unterbleiben und das Gerät ständig ein- oder ausgeschaltet bleiben, wird die Funktionstaste 17 so oft gedrückt, bis die Leuchtanzeige 5 "Dauereinschaltung" aufleuchtet. Damit bleibt der Schalter für das steuerbare Gerät geschlossen und im Display erscheinen anstelle der aktuellen Uhrzeit die Buchstaben "P:Er" für "Permanent". Die Symbole 10 und 23 bzw. 11 und 22 leuchten dann wechselseitig auf. Durch Betätigen der Tasten 15 bzw. 16 kann das Gerät permanent ein- oder ausgeschaltet werden (FIG 5).

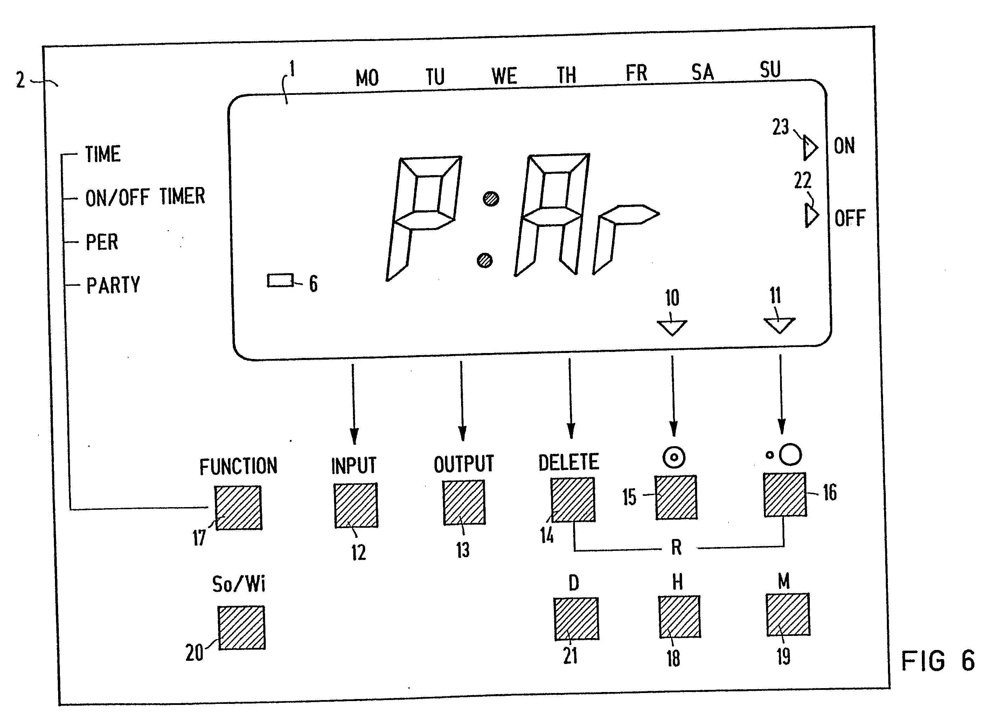

Wenn eine zeitlich begrenzte Einschaltung unabhängig vom aktuellen Programm erfolgen soll, wird die Funktionstaste 17 erneut gedrückt, bis die Leuchtanzeige 6 aufleuchtet. In diesem Falle erscheinen auf dem Display anstelle der aktuellen Uhrzeit die Buchstaben "P:Ar" für "Partyschaltung" und das Gerät wird solange eingeschaltet, bis der nächste programmierte Schaltzeitpunkt erreicht ist. Die Symbole 10 und 23 bzw. 11 und 22 leuchten dann wechselseitig auf. Durch Betätigen der Tasten 15 bzw. 16 kann das Gerät dann bis zum nächsten Schaltzeitpunkt permanent ein- oder ausgeschaltet werden (FIG 6). Danach erlischt die Leuchtanzeige 6 und die aktuelle Uhrzeit erscheint wieder auf dem Display.

Soll das gesamte Programm gelöscht und durch ein neues ersetzt werden, werden die Tasten 14 "Löschen" und 16 "Ausschalten" gleichzeitig gedrückt. Beide Tasten sind auf der Abdeckplatte 2 durch eine Linie verbunden, die mit "alles löschen" bezeichnet ist.

## Ansprüche

1. Mikrocomputergesteuerte Programm-Einstellvorrichtung für ein Zeitschaltgerät mit einem Schalter zum Ein- und Ausschalten eines elektrisch steuerbaren Gerätes mit Einstelltasten für die Auswahl von auf einem Anzeigetableau (1) (Display) erscheinenden Daten und Datengruppen sowie Auswahltasten (17, 21) für die Auswahl der einzustellenden Daten und Datengruppen und mit einzelnen Tasten (12-16) zugeordneten Leuchtanzeigemitteln (7-11), die bis zur Betätigung der jeweils zugeordneten Taste blinken, **dadurch gekennzeichnet,**
- daß den Daten Tasten (12-16) zum unmittelbaren Eingeben von Einzelfunktionen in den Mikrocomputer und den Datengruppen von Tasten (17-21) gesteuerte Schieberegister zum zyklischen Anwählen der Einzeldaten aus den betreffenden Datengruppen und zu deren Einspeichern in den Mikrocomputer zugeordnet sind,
- daß eine der Datengruppen die Funktionsauswahl der Programm-Einstellvorrichtung, eine weitere die Wochentage und eine dritte die Uhrzeit beinhaltet,
- daß die Einzeldaten das Eingeben, das Auslesen, das Löschen sowie das Einschalten und das Ausschalten des Schalters umfassen,
- daß den Tasten für die Einzelfunktionen (12-16) Leuchtanzeigen (7-11) und den Leuchtanzeigen für die Datengruppen (3-6 und MO-SO) Klartextangaben außerhalb des Displays (1) sinnfällig zugeordnet sind,
- daß nach der Auswahl einer bestimmten Funktion der Mikrocomputer die weitere Bedienung durch Blinken der für eine Datenauslese oder für eine komplette Dateneingabe erforderlichen Leuchtanzeigen führt,
- daß die Reihenfolge der nicht geführten Dateneingaben beliebig ist und
- daß, nachdem alle für die komplette Dateneingabe notwendigen Daten gewählt sind, diese automatisch in den Speicher des Mikrocomputers übernommen werden.

2. Programm-Einstellvorrichtung nach Anspruch 1, **dadurch gekennzeichnet,** daß jede Taste nur mit einer einzigen Funktion belegt ist.

3. Programm-Einstellvorrichtung nach Anspruch 1 oder 2, **dadurch gekennzeichnet** daß eine Wahltaste (20) für die Einstellung von Sommerzeit und Winterzeit vorhanden ist und als Leuchtanzeigemittel die beiden Punkte des Doppelpunktes zwischen der Stundenanzeige und der Minutenanzeige in der Weise dienen, daß beide von je einem Symbol für die Sommerzeit und die Winterzeit umgeben sind und bei Einstellung der Sommerzeit das dem einen Punkt und bei Einstellung der Winterzeit das dem anderen Punkt des Doppelpunktes zugeordnete Symbol leuchtet.

4. Programm-Einstellvorrichtung nach einem der vorhergehenden Ansprüche, **dadurch gekennzeichnet,** daß durch gemeinsames Drücken der Löschtaste (14) und der Taste (16) für das Ausschalten des Schalters die im Mikrocomputer gespeicherte Gesamtinformation gelöscht ist.

5. Programm-Einstellvorrichtung nach einem der vorhergehenden Ansprüche, **dadurch gekennzeichnet,** daß die mit den Markierungen zwischen der Display-Anzeige und den zugeordneten Tasten sowie der diesen zugeordneten Klartextbeschriftung versehene Abdeckplatte (2) zum Zuordnen von Klartextbeschriftungen in unterschiedlichen Sprachen austauschbar ist.

6. Programm-Einstellvorrichtung nach einem der vorhergehenden Ansprüche, **dadurch gekennzeichnet,** daß in der Funktionsstufe (6) "Partyschaltung" der Schalter solange geschlossen bleibt, bis der nächste einprogrammierte Schaltpunkt erreicht ist, dann im gewählten Programm fortgefahren und die "Partyschaltung" gelöscht wird.

FIG 1

EP 0 339 373 A1

88 P 3171 E

88 P 3171 E

FIG 2

FIG 3

EP 0 339 373 A1

88 P 3171 E

MO TU WE TH FR SA SU

1

ON

OFF

TIME

ON/OFF TIMER

PER

PARTY

4

7 8 9

FUNCTION INPUT OUTPUT DELETE

17 12 13 14 15 16

R

So/Wi D H M

20 21 18 19

EP 0 339 373 A1

88 P 3171 E

FIG 4

FIG 5

EP 0 339 373 A1

88 P 3171 E

EP 0 339 373 A1

MO   TU   WE   TH   FR   SA   SU

1

23 ▷ ON

22 ▷ OFF

TIME

ON/OFF TIMER

PER

PARTY

☐ 6

10 ▽   11 ▽

2

FUNCTION   INPUT   OUTPUT   DELETE   ⊙   ∘○

17   12   13   14   15   16

R

So/Wi   D   H   M

20   21   18   19

88 P 3171 E

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | WO-A-8 303 688 (WESTDEUTSCHE ELEKTROGERÄTEBAU GmbH) * Seite 8, Zeile 20 - Seite 16, Zeile 6; Figuren * | 1 | G 04 G 15/00 G 05 D 23/19 |
| X | | 2 | |
| A | | 6 | |
| | --- | | |
| Y | US-A-4 293 915 (E.J. CARPENTER et al.) * Spalte 4, Zeile 1 - Spalte 8, Zeile 11 * | 1 | |
| A | | 2-6 | |
| | --- | | |
| A | DE-U-8 422 055 (SIEMENS AG) * Figuren * | 1,2,4,5 | |
| | --- | | |
| A | EP-A-0 197 336 (SIEMENS AG) * Spalte 2, Zeile 49 - Spalte 4, Zeile 38 * | 1,3,6 | |
| | --- | | |
| A | DE-B-2 902 604 (LGZ LANDYS & GYR ZUG AG) * Spalte 7, Zeilen 19-35 * | 1 | |
| | --- | | |
| A | US-A-4 385 841 (J. KRAMER) ----- | 1 | |

RECHERCHIERTE SACHGEBIETE (Int. Cl.4)

G 04 G
G 05 D

Der vorliegende Recherchenbericht wurde für alle Patentansprüche erstellt

| Recherchenort | Abschlußdatum der Recherche | Prüfer |
|---|---|---|
| DEN HAAG | 01-08-1989 | EXELMANS U.G.J.R. |